# EUROPÄISCHE PATENTSCHRIFT

(11) **EP 0 362 577 B1**
(45) Veröffentlichungstag und Bekanntmachung des Hinweises auf die Patenterteilung: **11.01.1995**
(21) Anmeldenummer: 89116842.9
(22) Anmeldetag: 12.09.1989
(51) Int. Cl.: G01N 21/71, G01J 3/02

(54) **Verfahren zur optischen Ankopplung eines Elementanalysesystems und eines Lasers an flüssiges Metall in einem Schmelzgefäss**
Process for optically bringing an element analysis system and a laser in touch with liquid metal in a crucible
Procédé pour l'accouplement optique d'un système d'analyse d'éléments et d'un laser a un métal liquide dans un creuset

(30) Priorität: 03.10.1988 DE 3833621
(43) Veröffentlichungstag der Anmeldung: 11.04.1990
(73) Patentinhaber: Fried. Krupp AG Hoesch-Krupp, 45143 Essen (DE)
(72) Erfinder: Carlhoff, Christoph, Dr. Dipl.-Phys., D-4156 Willich 2 (DE); Lorenzen, Claus-Jürgen, Dr. Dipl.-Phys., D-4300 Essen 18 (DE); Nick, Klaus-Peter, Dr. Dipl.-Phys., D-2807 Achim (DE)

(56) Entgegenhaltungen:
- DE-A- 3 413 589
- DE-B- 1 165 627
- GB-A- 1 062 591
- GB-A- 2 154 315
- PATENT ABSTRACTS OF JAPAN, Band 8, Nr. 278 (P-322)[1715], 19. Dezember 1984;& JP-A-59 145 932

## Beschreibung

Die Erfindung betrifft ein Verfahren sowie eine Vorrichtung zur Elementanalyse mit laserinduzierter Emissionsspektralanalyse einer Metallschmelze an ihrer Oberfläche in einer Bohrung in einem Schmelzgefäß gemäß dem Oberbegriff des Anspruchs 1 bzw. Anspruch 4. Der direkte Zugang zum schlackefreien Metallbad erfolgt durch eine Bohrung in der Seitenwand unterhalb des Badspiegels oder im Boden des Schmelzgefäßes. Um ein Auslaufen des flüssigen Metalls zu verhindern, wird durch Einblasen eines Gases der notwendige Gegendruck erzeugt. Ein Laserstrahl wird auf ein Oberflächenteil der Schmelze am Ende der Bohrung fokussiert und erzeugt dort ein Plasma, das eine für die im Plasma befindlichen Elemente spezifische Strahlung emittiert, die durch die Bohrung auf einen Spektrographen geführt und dort spektral zerlegt wird.

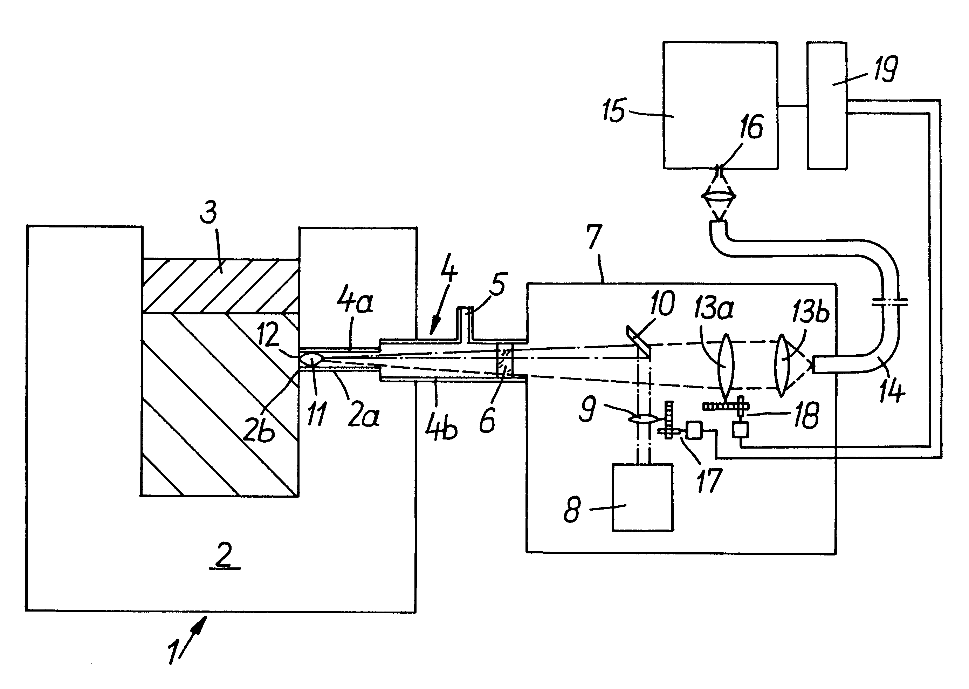

Ein Verfahren und eine Vorrichtung dieser Art werden in der DE-OS 3413589 beschrieben. Als Gas zur Erzeugung des notwendigen Gegendrucks wird ein inertes Gas verwendet. Dabei ist es schwierig, den Gasdurchsatz so einzustellen, daß in jedem Fall ein Zufrieren der Mündung der Bohrung unterbleibt. Die Metalloberfläche an der Bohrung muß daher ständig kontrolliert werden. Die optische Ankopplung des Lasers und des Spektrometers ist bei abnehmender Wandstärke des Schmelzgefäßes nicht optimierbar. Mit abnehmender Wandstärke ist der Laserstrahl nicht mehr auf der Metalloberfläche fokussiert, die Anregungstemperatur sinkt. Die Apertur der Bohrung kann bei abnehmender Wandstärke des Schmelzgefäßes für das emittierte Licht nicht optimal genutzt werden, die Abbildung für das emittierte Licht ist unscharf, die Lichtausbeute wird vermindert und das Spektrum verfälscht. Bei dem bekannten Verfahren treten darüber hinaus zusätzliche Probleme dadurch auf, daß die unvermeidlichen Mikrobewegungen des Schmelzgefäßes (Erschütterungen u. ä.) auf das Spektrometer übertragen werden. Dadurch werden zum Beispiel die Intensitäten und Halbwertsbreiten der Spektrallinien weiter verschlechtert.

Aufgabe der Erfindung ist daher ein Verfahren und eine Vorrichtung, die die genannten Nachteile vermeiden.

Die Aufgabe wird erfindungsgemäß dadurch gelöst, daß der Bohrung ein inertes Gas mit einer Temperatur von mehr als 300 °C, vorzugsweise von mehr als 500 °C zugeführt wird, wobei die Bohrung mit einem Rohr versehen ist, das außen mit einem Quarzfenster abgeschlossen wird und eine seitliche Zuführung für das Gas hat. Durch das Quarzfenster wird das Laserlicht auf die Metalloberfläche geschickt und erzeugt dort ein Plasma, dessen Licht dem Spektrometer zugeführt wird. Das Quarzfenster öffnet sich zu einem Gehäuse, das mit dem Rohr verbunden ist. Über den Lichtwellenleiter wird das von der Metalloberfläche emittierte Licht zum Spektrometer hinaus geführt. Durch den Lichtwellenleiter wird die Übertragung der Bewegungen des Schmelzgefäßes auf das Spektrometer weitgehend vermieden. Im Inneren des Gehäuses befinden sich der Laser, Linsensysteme und Umlenkspiegel letztere sind so justiert, daß der Laserstrahl auf die Metalloberfläche in der Bohrung fokussiert ist und das Plasma auf den Lichtwellenleiter abgebildet wird. Entsprechend der Abnahme der Schmelzgefäßwandstärke werden die Fokussierung für den Laserstrahl und das Abbildungssystem für das emittierte Licht nachgeführt. Der Laserstrahl ist dabei dann auf die Metalloberfläche fokussiert, wenn das Intensitätsverhältnis Me_{I}/Me_{II} (Mel_{I} = Intensität einer Atomlinie eines Metalls der Schmelze, Me_{II} = Intensität einer Ionenlinie des gleichen Metalls) ein Minimum ist.

Außerdem kann vorteilhafterweise die Effiziens dadurch erhöht werden, daß das Rohr sich aus Rohrstücken zusammensetzt, deren Durchmesser von der Plasmaquelle zum Gehäuse zunehmen. Die Rohrstücke bestehen zur besseren Anpassung aus verschiedenem Material, z. B. Keramik oder Metall. Die Rohrstücke werden in bekannter Technik miteinander gasdicht verbunden. Das Rohrstück in der Zustellung des Schmelzgefäßes besteht vorteilhafterweise aus Keramik. Besonders günstig ist für dieses Rohrstück ein Innendurchmesser von 5 - 10 mm.

Es ist besonders vorteilhaft, wenn der Laserstrahl in einem spitzen Winkel am äußersten Rand des Rohrs geführt wird und über einen Spiegel seitwärts eingekoppelt wird, um so eine möglichst geringe Dämpfung des emittierten Lichts durch den Spiegel zu erreichen. Besonders vorteilhaft sind Strahlteiler, die das Laserlicht reflektieren und für den interessierenden Wellenlängenbereich des emittierten Lichts durchlässig sind.

Besonders günstig ist es, wenn der Lichtwellenleiter zum Spektrometer als Querschnittswandler ausgeführt ist, so daß mit einer geeigneten Anpassungsoptik der Eintrittsspalt am Spektrometer gerade voll ausgeleuchtet ist.

Der Gegenstand der Erfindung wird in der Zeichnung an einem schematisch dargestellten Beispiel näher erläutert.

Ein Schmelzgefäß 1 mit feuerfester Ausmauerung 2 (hier: zur Produktion von Stahl) wird unterhalb des Schlackespiegels 3 mit einer Bohrung versehen. In diese Bohrung 2a durch die Zustellung hindurch wird ein Rohr 4 mit einem Gasanschluß 5 und einem Quarzfenster 6 geschoben. Das Rohrstück 4a in der Zustellung besteht aus Keramik (6 mm Innendurchmesser) das anschließende Rohrstück 4b bis zum Gehäuse 7 aus Edelstahl Das Keramikrohr ist in die Zustellung eingeklebt und auch mit dem Edelstahlrohr in Klebetechnik verbunden.

Durch den Gasanschluß wird Argon mit einer Temperatur von mehr als 500 °C geführt.

Das Rohr 4 ist mit dem Gehäuse 7 verbunden. In diesem Gehäuse befinden sich der Festkörper-Laser 8 und optische Komponenten zur Strahlführung von Laser- und Plasmalicht. Das Licht des gepulsten Festkörperlasers 8 wird durch die Linsenanordnung 9 über einen ovalen Spiegel 10 auf die freie Schmelzbadoberfläche 12 fokussiert. Im Brennfleck wird das Metalldampfplasma 11 erzeugt.

Das vom heißen Plasma emittierte Licht gelangt am Spiegel 10 (der Spiegel verdeckt nur ca. 20 % der Austrittsfläche) vorbei auf die Linsenanordnung 13a und 13b und wird in den Quarz-Lichtwellenleiter 14, ein Faserbündel mit Querschnittswandlung, eingekoppelt.

Über den Lichtwellenleiter 14 gelangt das Plasmalicht in den Spektrographen 15 der mit einem Detektorsystem ausgerüstet ist. Die spektrale Intensitätsverteilung wird im angeschlossenen Rechner 19 analysiert. Die Steuerung der Antriebe 17 und 18 zur Verstellung der Linsen 9 und 13a wird vom Rechner bewirkt. Die Linsen 9 und 13a werden so eingestellt, daß das Intensitätsverhältnis Fe_{I}/Fe_{II} zweier Eisenlinien - Fe_{I} = Intensität einer Atomlinie, Fe_{II} = Intensität einer Ionenlinie - minimal ist. Die entsprechenden Analysen und Rechnungen werden im Rechner durchgeführt.

## Patentansprüche

1. Verfahren zur Elementanalyse mit laserinduzierter Emmissionsspektralanalyse einer Metallschmelze an ihrer Oberfläche in einer Bohrung (2a) in einem Schmelzgefäß (1), wobei das emittierte Licht in einen Lichtwellenleiter (14) gekoppelt wird, der das Licht in ein Spektrometer (15) koppelt, **dadurch gekennzeichnet,** daß durch die Bohrung (2a) ein inertes Gas mit einer Temperatur von mehr als 300 °C geblasen wird, und mit der Bedingung Me_{I}/Me_{II} minimal - wobei Me_{I} die Strahlungsintensität einer Atomlinie eines Metalls der Schmelze, und Me_{II} die Strahlungsintensität einer Ionenlinie des gleichen Metalls ist - der Laserstrahl mittels eines ersten justierbaren Linsensystems (9, 17) auf die Oberfläche der Schmelze (12) in der Bohrung (2a) fokussiert und das dort entstehende Plasma (11) mittels eines zweiten justierbaren Linsensystems (13a, 13b, 18) auf den Lichtwellenleiter (14) abgebildet wird.

2. Verfahren nach Anspruch 1, dadurch gekennzeichnet, daß als inertes Gas Argon mit einer Temperatur von mehr als 500 °C durch die Bohrung (2a) geblasen wird.

3. Verfahren nach den vorhergehenden Ansprüchen, dadurch gekennzeichnet, daß die Linsensysteme (9 bzw. 13a) für das Laserlicht und das emittierte Plasmalicht mit der Wandstärkenänderung des Schmelzgefäßes (1) so nachjustierbar sind, daß der Laserstrahl auf die Oberfläche der Schmelze (12) fokussiert bleibt und das Plasma auf den Lichtwellenleiter (14) abgebildet wird.

4. Vorrichtung zur Elementanalyse mit laserinduzierter Emissionsspektralanalyse einer Metallschmelze nach den vorhergehenden Ansprüchen, dadurch gekennzeichnet, daß sich der Laser (8) zur Erzeugung des Laserstrahls mit einem ersten justierbaren Linsensystem (9, 17) und einem Spiegel (10) zur Fokussierung des Laserstrahls auf die Oberfläche der Schmelze (12) im Schmelzgefäß (1) und mit einem zweiten justierbaren Linsensystem (13a, 13b, 18) zur Abbildung des Plasmas (11) auf einen Lichtwellenleiter (14) in einem Gehäuse (7) befindet, das einerseits mit einem Rohr (4) verbunden ist, welches in eine Bohrung (2a) des Schmelzgefäßes (1) ragt, gegen das Gehäuse mit einem Quarzfenster (6) verschlossen ist und zwischen Schmelzgefäß (1) und Quarzfenster (6) einen seitlichen Stutzen (5) für die Gaszufuhr aufweist, und das andererseits über den Lichtwellenleiter (14) mit einem Spektrometer (15) verbunden ist.

5. Vorrichtung nach Anspruch 4, dadurch gekennzeichnet, daß der Lichtwellenleiter (14) zum Spektrometer (15) als Querschnittwandler ausgebildet ist, so daß das gesamte Licht im Lichtwellenleiter am Eintrittsspalt (16) des Spektrometers (15) zur Verfügung steht.

6. Vorrichtung nach den Ansprüchen 4 bis 5, dadurch gekennzeichnet, daß das Rohr (4) sich aus Rohrstücken (4a, 4b) zusammensetzt, deren Durchmesser von der Plasmaquelle (Plasma 11) in Richtung auf das Gehäuse (7) zunehmen.

## Claims

1. Process for element analysis with laser-induced emission spectrographic analysis of a metal melt on its surface in a hole (2a) in a crucible (1), wherein the emitted light is coupled into a beam waveguide (14), which couples the light into a spectrometer (15), characterised in that an inert gas is blown through the hole (2a) at a temperature of more than 300°C and with minimal ratio Me_{I}/Me_{II} - Me_{I} being the radiation intensity of an atom line of a metal in the melt and Me_{II} the radiation intensity of an ion line in the same metal -, the laser beam is focussed onto the surface of the melt (12) in the hole (2a) by means of a first adjustable lens system (9, 17) and the plasma (11) formed there is imaged on the beam waveguide (14) by means of a second adjustable lens system (13a, 13b, 18).

2. Process according to Claim 1, characterised in that the inert gas argon is blown through the hole (2a) at a temperature of more than 500°C.

3. Process according to the preceding claims, characterised in that the lens systems (9 or 13a) may be readjusted for the laser light and the emitted plasma light when there is a change in the wall thickness of the crucible (1) in such a way that the laser beam remains focussed on the surface of the melt (12) and the plasma is imaged onto the beam waveguide (14).

4. Device for element analysis with laser-induced emission spectrographic analysis of a metal melt according to the preceding claims, characterised in that the laser (8) for generating the laser beam is provided with a first adjustable lens system (9, 17) and a mirror (10) for focussing the laser beam onto the surface of the melt (12) in the crucible (1) and is provided with a second adjustable lens system (13a, 13b, 18) for imaging the plasma (11) onto a beam waveguide (14), and is located in a housing (7) connected on one side to a pipe (4), which protrudes into a hole (2a) of the crucible (1), is sealed off from the housing by a quartz window (6) and between the crucible (1) and the quartz window (6) has a lateral connection (5) for the gas supply, and said housing (7) is connected on the other side via the beam waveguide (14) to a spectrometer (15).

5. Device according to Claim 4, characterised in that the beam waveguide (14) to the spectrometer (15) is provided in the form of a shape converter, so that all the light in the beam waveguide is available at the entrance slit (16) of the spectrometer (15).

6. Device according to Claims 4 to 5, characterised in that the pipe (4) is composed from pipe sections (4a, 4b), the diameters of which increase from the plasma source (plasma 11) in the direction of the housing (7).

## Revendications

1. Procédé d'analyse d'éléments comportant une analyse d'émission spectrale, induite par laser à la surface externe d'une masse métallique en fusion, dans un alésage (2a) dans un creuset de fusion (1), la lumière émise étant couplée dans un conducteur à fibres optiques (14), qui accouple la lumière dans un spectromètre (15),
caractérisé
en ce qu'un gaz inerte, à une température de plus de 300°C, est soufflé au travers de l'alésage (2a), et, en ce qu'avec la condition Me_{I}/Me_{II} minimale - où Me_{I} est l'intensité de rayonnement d'une ligne d'atomes d'un métal de la masse en fusion et Me_{II} est l'intensité de rayonnement d'une ligne d'ions du même métal - le rayon laser est focalisé sur la surface externe de la masse en fusion (12) dans l'alésage (2a), au moyen d'un premier système ajustable de lentilles (9, 17) et que le plasma (11) existant à cet endroit forme une image sur le conducteur à fibres optiques (14) au moyen d'un deuxième système ajustable de lentilles (13a, 13b, 18).

2. Procédé suivant la revendication 1, caractérisé en ce que, comme gaz inerte, on souffle, par l'alésage (2a), de l'argon à une température de plus de 500°C.

3. Procédé suivant l'une des revendications précédentes, caractérisé en ce que l'ajustage des systèmes ajustables de lentilles (respectivement 9 et 13a) de la lumière laser et de la lumière de plasma émise peut être corrigé avec la variation de l'épaisseur de paroi du creuset de fusion (1) de telle façon que le rayon laser reste focalisé sur la surface supérieure de la masse en fusion (12) et que le plasma forme une image sur le conducteur à fibres optiques (14).

4. Dispositif d'analyse d'éléments comportant une analyse d'émission spectrale induite par laser d'une masse métallique en fusion, suivant les revendications précédentes, caractérisé en ce que le laser (8) pour réaliser le rayonnement laser, et comportant un premier système de lentilles ajustable (9, 17) et un miroir (10) pour focaliser le rayon laser sur la surface supérieure de la masse en fusion (12) dans le creuset de fusion (1) et comportant un deuxième système de lentilles ajustable (13a, 13b, 18) pour former une image du plasma (11) sur un conducteur à fibres optiques (14), se trouve dans un carter (7), ce carter étant, d'une part, relié à un tube (4), qui dépasse dans un alésage (2a) du creuset de fusion (1), est fermé contre le carter avec une fenêtre de quartz (6) et présente, entre le creuset de fusion (1) et la fenêtre de quartz (6), un raccord latéral (5) pour l'alimentation en gaz, et ce carter étant, d'autre part, relié à un spectromètre (15) par l'intermédiaire d'un conducteur à fibres optiques (14).

5. Dispositif suivant la revendication 4, caractérisé en ce que le conducteur à fibres optiques (14) vers le spectromètre (15) est réalisé sous la forme d'un convertisseur de section, de telle façon que l'on dispose de la totalité de la lumière dans le conducteur à fibres optiques à la fente d'entrée (16) du spectromètre (15).

6. Dispositif suivant les revendications 4 et 5, caractérisé en ce que le tube (4) est constitué par l'assemblage d'éléments de tube (4a, 4b), dont le diamètre est croissant depuis la source de plasma (plasma 11) en allant dans la direction du carter (7).
